Europäisches Patentamt

European Patent Office

Office européen des brevets

(11) Numéro de publication: **0 524 856 B1**

# FASCICULE DE BREVET EUROPEEN

(45) Date de publication du fascicule du brevet: **04.10.95** (51) Int. Cl.[6]: **G01L 19/04**

(21) Numéro de dépôt: **92401978.9**

(22) Date de dépôt: **09.07.92**

(54) **Procédé pour corriger de l'influence de la température les mesures d'une jauge de pression.**

(30) Priorité: **26.07.91 FR 9109481**

(43) Date de publication de la demande:
**27.01.93 Bulletin 93/04**

(45) Mention de la délivrance du brevet:
**04.10.95 Bulletin 95/40**

(84) Etats contractants désignés:
**DE GB IT NL**

(56) Documents cités:
**FR-A- 2 615 618**
**GB-A- 2 125 212**

(73) Titulaire: **SCHLUMBERGER LIMITED**
**277 Park Avenue**
**New York, N.Y. 10172 (US)**
(84) Etats contractants désignés:
**GB**

(73) Titulaire: **SCHLUMBERGER TECHNOLOGY B.V.**
**Carnegielaan 12**
**NL-2517 KM Den Haag (NL)**
(84) Etats contractants désignés:
**DE IT**

(73) Titulaire: **SCHLUMBERGER HOLDINGS LIMI-TED**

**P.O. Box 71,**
**Craigmuir Chambers**
**Road Town, Tortola (VG)**
(84) Etats contractants désignés:
**NL**

(72) Inventeur: **Berard, Michel**
**176, rue de Paris**
**F-91120 Palaiseau (FR)**
Inventeur: **Jinzaki, Yoshinobu**
**2F-D, 4-23-19, Minami-Naruse**
**Machida,**
**Tokyo 194 (JP)**
Inventeur: **Eisenmann, Pierre**
**11, rue Emile Dubois**
**F-75014 Paris (FR)**
Inventeur: **Dubourg, Isabelle**
**1, rue Charles Baudelaire**
**F-92240 Malakoff (FR)**

(74) Mandataire: **Hagel, Francis et al**
**ETUDES ET PRODUCTIONS SCHLUMBERGER**
**Service Brevets**
**B.P. 202**
**F-92142 Clamart Cédex (FR)**

Rank Xerox (UK) Business Services
(3. 10/3.0 9/3.3.3)

## Description

L'invention concerne de façon générale un procédé pour corriger de l'influence de la température les mesures d'une jauge de pression. L'invention concerne plus particulièrement un procédé de correction dynamique, permettant de corriger des effets de variations rapides de température (appelées transitoires), les mesures fournies par une jauge de pression. L'invention est spécialement applicable aux mesures de pression effectuées au moyen d'une capteur piézoélectrique, et trouve un intérêt particulier dans le cas des mesures effectuées dans les forages pétroliers.

Il est connu que les jauges de pression fournissent des mesures qui sont fortement affectées par la température. Cela est vrai des jauges de pression comportant un résonateur fait d'un cristal piézoélectrique, dont le principe utilise la modification de la fréquence de résonance du résonateur résultant de la pression appliquée à la jauge. Cela est également vrai pour les jauges de contrainte telles que les jauges à pont piézorésistif, comportant des résistances montées en pont dont la valeur est modifiée par les déformations dues à l'application d'une pression.

Le brevet US 4 607 530 (Chow) offre un exposé détaillé des techniques pour éliminer l'effet de la température sur les mesures de pression, consacré plus particulièrement au domaine des jauges à cristal piézoélectrique. Une technique classique, décrite dans le brevet US 3 561 832, consiste à prévoir une seconde jauge servant de référence, soumise aux mêmes fluctuations de température que la jauge de mesure, mais à laquelle on applique une pression constante. Une fois atteint l'équilibre thermique, la différence des fréquences d'oscillation des deux jauges est supposée donner une indication, non affectée par la température, de la différence entre les pressions respectivement appliquées aux jauges.

Cette technique de compensation, dite statique, suppose pour être complète que les jauges soient thermiquement à l'équilibre, en d'autres termes que la température soit la même en tous points des jauges. Or les conditions réelles de mesure sont souvent éloignées de l'équilibre, en particulier dans le cas de mesures effectuées dans un forage pétrolier. Des variations rapides de la température et de la pression du fluide du forage sont en effet très fréquentes, et ceci pour différentes raisons. Par exemple, si la mesure est réalisée à l'aide d'un dispositif que l'on déplace dans le forage, afin d'obtenir une diagraphie (profil de pression en fonction de la profondeur), la température de l'environnement du dispositif évolue constamment, du fait du gradient géothermique, au rythme du dit déplacement, et pour les valeurs courantes de la vitesse de déplacement, l'équilibre n'a pas le temps de s'établir. Ou bien, si le dispositif, placé à une profondeur déterminée dans le forage, est utilisé dans des essais au cours desquels on provoque des variations rapides de la pression agissant sur la jauge, les chocs de pression donnent lieu à des échauffements adiabatiques. Dans de telles conditions, la température n'est pas uniforme en tous points des jauges, ce qui rend imparfaite la compensation statique mentionnée ci-dessus.

Pour obtenir une compensation des mesures de pression en l'absence d'équilibre thermique de la jauge, le brevet Chow précité a proposé, pour le cas d'une jauge à quartz piézoélectrique, de déterminer cette compensation sur la base d'un modèle dynamique de température établi à partir de la mesure de pression et d'une mesure de la température à proximité du résonateur.

Dans le domaine des jauges de pression à quartz piézoélectrique, une percée a été obtenue avec le dispositif décrit dans le brevet français 2 531 533. Ce dispositif est remarquable en ce que l'élément piézoélectrique vibre simultanément selon deux modes de vibration présentant des caractéristiques de sensibilité totalement différentes : l'un des modes (mode C) est très sensible à la pression, alors que l'autre mode (mode B) est très peu sensible à la pression, de sorte que la fréquence de vibration dans ce second mode est essentiellement fonction de la température. Les mesures de température ainsi obtenues présentent, du point de vue de la compensation des mesures de pression, l'avantage de concerner l'élément piézoélectrique lui-même, et non son environnement comme dans les dispositifs disponibles auparavant.

Il est indiqué dans ce brevet que la fréquence de vibration du mode C varie avec la température T selon la relation :

$$\frac{\Delta f}{f_o} = a(T - T_o) + b(T - T_o)^2 + c(T - T_o)^3 + k\frac{dT}{dt}$$

$T_o$ étant une température de référence, $dT/dt$ la dérivée de la température par rapport au temps et a, b, c, k des coefficients. Les termes en $T - T_o$ constituent la correction statique, cependant que le terme $k.dT/dt$ correspond à l'effet dynamique (transitoire) qui apparaît lors d'une variation rapide de la température T de l'élément piézoélectrique.

On a toutefois constaté, dans les situations évoquées ci-dessus, que la correction dynamique ainsi définie n'est pas tout à fait satisfaisante, les valeurs de pression obtenues présentant encore à l'évidence des erreurs imputables aux transitoires de température.

L'invention vise à obtenir une correction dynamique plus complète des mesures de pression.

Selon un premier mode de réalisation de l'invention, on ajoute à la valeur de pression mesurée à un instant t une correction comprenant la somme d'un premier terme proportionnel à la dérivée première $dT/dt$ de la température par rapport au temps, et d'un deuxième terme proportionnel à la dérivée seconde $d^2T/dt^2$ de la température par rapport au temps.

Selon un autre mode de réalisation, on ajoute à la valeur de pression mesurée à un instant t une correction proportionnelle à la variation de la température T au cours d'un intervalle de durée $\tau$ commençant à l'instant t.

L'invention sera bien comprise à la lecture de la description ci-après, faite en référence aux dessins annexés. Dans les dessins

- la figure 1 montre schématiquement un capteur de pression conforme à l'enseignement du brevet français 2 531 533;
- la figure 2 donne un exemple de la correction dynamique effectuée selon un premier mode de réalisation de l'invention, appliquée à des mesures obtenues avec le capteur de la figure 1;
- la figure 3 illustre la correction dynamique effectuée conformément à un deuxième mode de réalisation de l'invention.

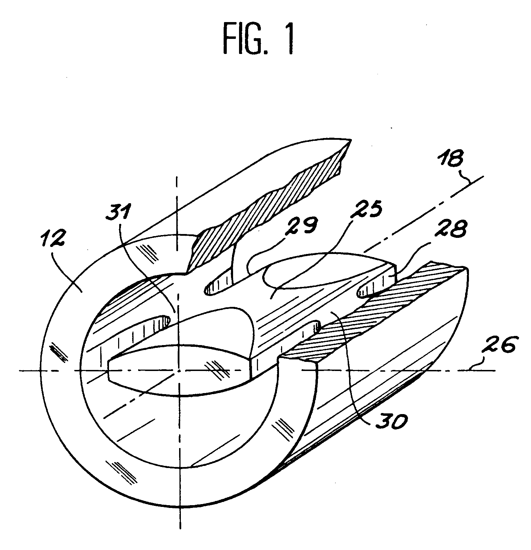

La figure 1 représente un capteur piézoélectrique du type décrit dans le brevet français 2 531 533. Pour plus d'informations concernant ce capteur, on se reportera à ce document. On rappellera seulement que le capteur comprend un élément tubulaire 12 d'axe 18. Une plaquette 25 formant résonateur s'étend à l'intérieur de l'élément tubulaire 12, cette plaquette ayant, vue en plan, la forme d'un rectangle dont les grands côtés sont parallèles à l'axe 18 de l'élément tubulaire. La plaquette est symétrique, dans le sens de son épaisseur, par rapport à un plan dont la trace est repérée en 26 et qui est un plan diamétral de l'élément tubulaire 12. La plaquette est limitée latéralement par deux faces 28, 29 qui sont reliées par des ponts de liaison respectifs 30, 31 à la surface intérieure de l'élément tubulaire 12. L'élément tubulaire 12, la plaquette 25 et les ponts de liaison 30, 31 sont formés dans un seul et même bloc de cristal piézoélectrique.

La plaquette présente plusieurs modes de vibration, présents simultanément, qui diffèrent par leur fréquence. On utilise les modes de vibration dits de cisaillement d'épaisseur B et C.

Selon l'enseignement du brevet précité, la coupe de la plaquette et la direction d'application des efforts à la plaquette, à travers les ponts de liaison, sont définies de telle manière que la sensibilité de la fréquence de vibration aux efforts soit élevée pour un mode de vibration, et pratiquement nulle pour l'autre mode. La fréquence dans le premier mode (mode C) est ainsi représentative de la pression qui s'exerce sur la surface extérieure de l'élément tubulaire 12, tandis que la fréquence de l'autre mode (mode B) est très peu sensible à la pression. Dans les deux modes, la fréquence est fortement dépendante de la température. La fréquence du mode B, étant très peu sensible à la pression, est représentative de la température T de la plaquette 25. La connaissance de la température T permet de déterminer une correction de température C(T), que l'on applique aux mesures de pression brutes $P_{mes}$, obtenues à partir de la fréquence du mode C, pour calculer les valeurs de pression corrigées $P_{corr}$ :

$$P_{corr} = P_{mes} + C(T)$$

Comme exposé plus haut, le terme de correction C(T) est en fait l'addition d'un terme statique $C_s(T)$ et d'un terme dynamique $C_d(T)$.

Le terme statique $C_s(T)$ décrit l'effet de la température une fois atteint l'équilibre thermique dans le capteur. Il est fonction uniquement de la différence entre la température T du capteur et une température de référence $T_o$, fixée par exemple à 25°C. Comme on l'a vu, le brevet précité indique pour ce terme statique un polynôme du troisième degré :

$$C_s(T) = a(T - T_o) + b(T - T_o)^2 + c(T - T_o)^3$$

Dans ce qui suit, on notera $P_{sta}$ les valeurs de pression obtenues par application de la seule correction statique :

$$P_{sta} = P_{mes} + C_s(T)$$

Le terme dynamique $C_d(T)$ correspond à l'influence des variations rapides (transitoires) de température, dues à des variations de la température et/ou de la pression du fluide environnant. Ces transitoires occasionnent des variations de température non uniformes dans l'élément résonateur.

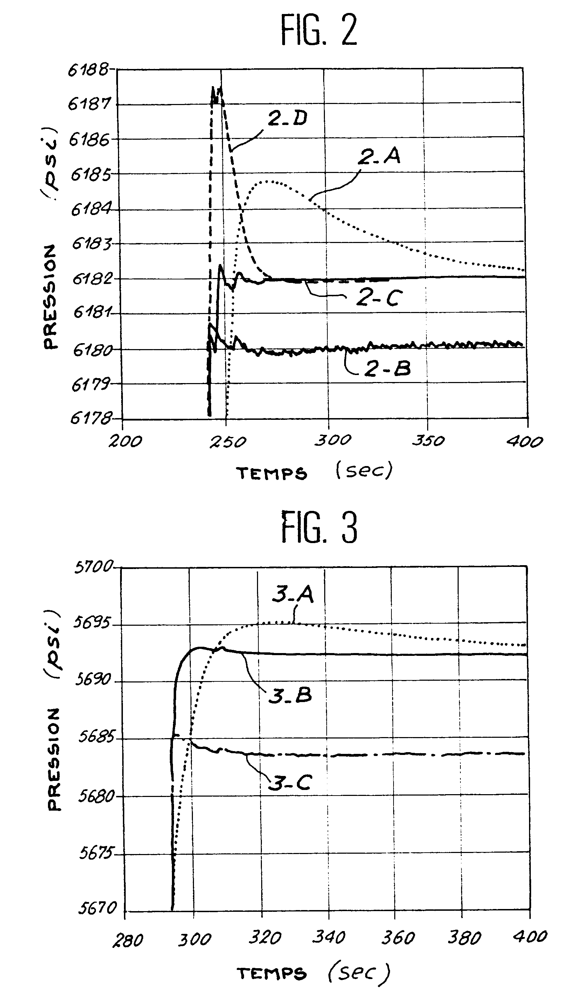

La courbe 2-A de la figure 2 illustre l'influence de ces transitoires de température sur les mesures de pression, dans le cas où la pression appliquée au capteur subit un accroissement brutal. L'échauffement adiabatique qui en résulte se traduit par un transitoire de température qui conduit à exagérer momentanément l'accroissement de pression (effet désigné en anglais par le terme "overshoot"). Il est à préciser, en ce qui concerne la figure 2, que l'unité de pression utilisée est le psi (livre par pied carré : 1 psi = 0,07 kg/cm$^2$), unité la plus utilisée dans l'industrie pétrolière, et que les pressions indiquées sont les valeurs $P_{sta}$ précitées, corrigées de l'effet statique. A titre de comparaison, la courbe 2-B représente les valeurs de pression obtenues au moyen d'une jauge de contrainte du commerce, moins précise et plus bruitée qu'un capteur piézoélectrique, mais possédant un temps de réponse plus court.

L'expérience montre par ailleurs que dans le cas d'une chute brutale de pression, il se produit un effet du même type, mais en sens inverse, à savoir une exagération momentanée de la chute de pression (effet appelé en anglais "undershoot").

Selon un mode de réalisation, le terme dynamique comprend l'addition d'un terme proportionnel à la dérivée première de la température par rapport au temps, et d'un terme proportionnel à la dérivée seconde de la température par rapport au temps, conformément à la relation :

$$C_d(T) = A_1(T) \frac{dT}{dt} + A_2(T) \frac{d^2T}{dt^2} \qquad (1)$$

où $A_1(T)$ et $A_2(T)$ sont des coefficients dépendant de la température.

Pour chacun de ces coefficients, on a trouvé que la dépendance vis-à-vis de la température pouvait être exprimée de manière adéquate par un polynôme du second degré. Les coefficients du polynôme sont à déterminer pour chaque type ou réalisation de la jauge. Pour le capteur piézoélectrique décrit dans le brevet précité 2 531 533, on a trouvé les expressions suivantes :

$$A_1(T) = 234 \left(1 + 0,166 \frac{T}{100} + 0,195 \left(\frac{T}{100}\right)^2\right) \qquad (2-1)$$

$$A_2(T) = 737 \left(1 - 0,155 \frac{T}{100} + 0,476 \left(\frac{T}{100}\right)^2\right) \qquad (2-2)$$

La figure 2 illustre l'efficacité de la correction dynamique décrite ci-dessus. La courbe 2-C en trait plein est obtenue en appliquant cette correction aux valeurs de la courbe 2-A en pointillé. On note que cette courbe atteint en quelques secondes une valeur de pression stable, et qu'elle décrit la variation de la pression d'une manière tout à fait similaire à la courbe 2-B (à un décalage près de 2 psi, probablement dû à une question de calibration).

La figure 2 comprend également une courbe 2-D, qui illustre le résultat de la méthode décrite dans le brevet français 2 531 533 précité, utilisant seulement une correction proportionnelle à la dérivée première de la température : cette méthode permet d'atteindre une valeur stable, mais après un temps plus long que la méthode de l'invention, et exagère plus fortement que la courbe 2-A l'accroissement de pression initial.

La mise en oeuvre de la méthode décrite ci-dessus utilise les techniques classiques de calcul de dérivées. A chaque instant t, on associe une fenêtre temporelle centrée sur l'instant t, de durée fixe, et on calcule les dérivées de la température à partir de l'ensemble des valeurs de température obtenues dans cette fenêtre. Par exemple, si l'on obtient une mesure trois fois par seconde, on peut choisir une fenêtre de 3 secondes, comprenant en tout 9 valeurs.

Selon un autre mode de réalisation, le terme de correction dynamique à appliquer à un instant t est défini comme étant proportionnel à la différence entre la température $T(t + \tau)$ mesurée après écoulement d'un intervalle $\tau$ commençant à l'instant t et la température $T(t)$, conformément à la relation :

$$C_d(T) = A_0(T)[T(t + \tau) - T(t)] \qquad (3)$$

où $A_0(T)$ est un coefficient dépendant de la température, et $\tau$ est une durée qui dépend également de la température.

L'expression ci-dessus est mathématiquement voisine de l'expression (1) précédente. En effet, on peut écrire :

$$A_0(T)[T(t + \tau) - T(t)] \sim A_0(T)\left[\tau\,\frac{dT}{dt} + \frac{\tau^2}{2}\,\frac{d^2T}{dt^2}\right] \qquad (4)$$

$A_0(T)$ et $\tau$ peuvent ainsi être exprimées en fonction de $A_1$ et $A_2$ par les relations suivantes :

$$\tau = 2\,\frac{A_2(T)}{A_1(T)} \qquad (5\text{-}1)$$

et

$$A_0(T) = \frac{1}{2}\,\frac{A_1(T)^2}{A_2(T)} \qquad (5\text{-}2)$$

Si l'on utilise les expressions numériques (2-1) et (2-2) indiquées ci-dessus pour $A_1$ et $A_2$, on obtient pour $\tau$ et $A_0$ les relations suivantes :

$$\tau(T) = 5,75\left(1 - 0,055\,\frac{T}{100} + 0,120\left(\frac{T}{100}\right)^2\right) \qquad (6\text{-}1)$$

$$A_0(T) = 39,5\left(1 + 0,340\,\frac{T}{100} - 0,020\left(\frac{T}{100}\right)^2\right) \qquad (6\text{-}2)$$

Il est à noter que $\tau$ et $A_0$ sont relativement peu dépendants de la température dans les plages de température que l'on rencontre dans les forages pétroliers : $\tau$ est pratiquement constant entre 0 et 100°C (sa valeur étant environ 6 secondes) et augmente selon une loi quadratique entre 100 et 200°C. $A_0$ augmente linéairement entre 0 et 200°C de 40 à 60 psi/°C. En comparaison, les coefficients $A_1$ et $A_2$ correspondant aux expressions (2-1) et (2-2) augmentent respectivement de 100% et 150% entre 0 et 200°C.

La figure 3 montre une application de ce second mode de réalisation dans le cas d'un choc (accroissement) de pression. La courbe 3-A en pointillé représente la variation de la pression $P_{sta}$ après application de la correction statique susvisée. La courbe 3-B représente les valeurs de pression $P_{corr}$ obtenues après application de la correction dynamique conforme au second mode de réalisation. La courbe 3-C indique, à titre de comparaison, les résultats obtenus avec une jauge de contrainte du commerce.

Encore que les deux modes de correction exposés ci-dessus donnent en général des résultats équivalents, le second mode, utilisant la différence de températures $T(t + \tau) - T(t)$, permet un calcul plus simple et rapide que le premier mode (car celui-ci fait appel à un calcul de dérivées) et est moins sensible au bruit qui affecte les mesures de température. De plus, s'il apparaît une variation rapide dans les valeurs de température, les valeurs de pression obtenues à l'aide de la correction utilisant les dérivées peuvent présenter des artefacts sous la forme de pics parasites, qui n'apparaissent pas dans les valeurs de pression corrigées conformément au second mode de réalisation.

L'invention a été décrite dans le cas du capteur piézoélectrique représenté à la figure 1, qui est conçu pour fournir des données optimales du point de vue de la correction de température, puisque les mesures de température sont fournies par le même résonateur que les mesures de pression, ce qui garantit que les

EP 0 524 856 B1

données obtenues sont effectivement représentatives de la température du résonateur. Mais l'invention n'est pas limitée à ce type de capteur, et on peut envisager d'utiliser le procédé de correction dynamique de l'invention pour des capteurs de type différent.

**Revendications**

1.  Procédé pour corriger de l'influence des transitoires de température les mesures d'une jauge de pression, caractérisé par le fait que l'on ajoute à la valeur de pression mesurée à un instant t une correction comprenant la somme d'un premier terme proportionnel à la dérivée première dT/dt de la température par rapport au temps, et d'un deuxième terme proportionnel à la dérivée seconde $d^2T/dt^2$ de la température par rapport au temps.

2.  Procédé selon la revendication 1, dans lequel le premier et le second terme comportent des coefficients respectifs $A_1$ et $A_2$ qui dépendent de la température.

3.  Procédé selon la revendication 2, dans lequel les coefficients $A_1$ et $A_2$ varient avec la température selon des fonctions polynômes du second degré.

4.  Procédé pour corriger de l'influence des transitoires de température les mesures d'une jauge de pression, caractérisé par le fait que l'on ajoute à la valeur de pression mesurée à un instant t un terme de correction $A_0.[T(t + \tau) - T(t)]$ proportionnel à la différence entre la température $T(t + \tau)$, mesurée après écoulement d'un intervalle de durée $\tau$ commençant à l'instant t, et la température $T(t)$ à l'instant t.

5.  Procédé selon la revendication 4, dans lequel le coefficient $A_0$ et la durée $\tau$ dépendent de la température T.

6.  Procédé selon la revendication 5, dans lequel le coefficient $A_0$ et la durée $\tau$ varient avec la température selon des fonctions polynômes du second degré.

**Claims**

1.  A method of correcting pressure gauge measurements for the influence of temperature transients, comprising the step of adding to the value of pressure as measured at an instant t a correction comprising the sum of a first term proportional to the first derivative dT/dt of temperature relative to time, and a second term proportional to the second derivative $d^2T/dt^2$ of temperature relative to time.

2.  A method according to claim 1, in which the first and second terms respectively include coefficients $A_1$ and $A_2$ that depend on temperature.

3.  A method according to claim 2, in which the coefficients $A_1$ and $A_2$ vary with temperature in accordance with second degree polynomials.

4.  A method of correcting the measurements of a pressure gauge for the influence of temperature transients, comprising the step of adding to the pressure value measured at an instant t a correction term proportional to the difference between the temperature $T(t + \tau)$ measured after a time interval of duration $\tau$ has elapsed from instant t, and the temperature $T(t)$ at instant t.

5.  A method according to claim 4, in which said coefficient $A_0$ and said duration $\tau$ depend on temperature T.

6.  A method according to claim 5, in which said coefficient $A_0$ and said duration $\tau$ vary with temperature in accordance with second degree polynomial functions.

**Patentansprüche**

1.  Verfahren zum Korrigieren der Messungen eines Drucksensors bezüglich des Einflusses von Temperaturübergängen, dadurch gekennzeichnet, daß man dem zu einem Zeitpunkt t gemessenen Druckwert

6

eine Korrektur hinzufügt, umfassend die Summe eines ersten Terms, proportional der ersten Ableitung $dT/dt$ der Temperatur nach der Zeit, und einen zweiten Term, proportional der zweiten Ableitung $d^2T/dt^2$ der Temperatur nach der Zeit.

2. Verfahren nach Anspruch 1, bei dem der erste und der zweite Term jeweils Koeffizienten $A_1$ bzw. $A_2$ umfassen, die von der Temperatur abhängen.

3. Verfahren nach Anspruch 2, bei dem die Koeffizienten $A_1$ und $A_2$ sich mit der Temperatur gemäß Polynomfunktionen zweiten Grades ändern.

4. Verfahren zum Korrigieren der Messungen eines Drucksensors bezüglich des Einflusses von Temperaturübergängen, dadurch gekennzeichnet, daß man dem zu einem Zeitpunkt t gemessenen Druckwert einen Korrekturterm $A_0.[T(t + \tau) - T(t)]$ proportional der Differenz zwischen der Temperatur $T(t + \tau)$, gemessen nach Verstreichen eines Intervalls der Dauer $\tau$, beginnend zum Zeitpunkt t, und der Temperatur $T(t)$ zum Zeitpunkt t, hinzufügt.

5. Verfahren nach Anspruch 4, bei dem der Koeffizient $A_0$ und die Dauer $\tau$ von der Temperatur T abhängen.

6. Verfahren nach Anspruch 5, bei dem der Koeffizient $A_0$ und die Dauer $\tau$ sich mit der Temperatur gemäß Polynomfunktionen zweiten Grades ändern.

# FIG. 1

# FIG. 2

# FIG. 3